# EUROPEAN PATENT APPLICATION

(11) **EP 2 317 248 A1**
(43) Date of publication of application: **04.05.2011**
(21) Application number: 09806457.9
(22) Date of filing: 31.07.2009
(51) Int. Cl.: F24J 2/54, H01L 31/042

(54) **SOLAR TRACKER**

(30) Priority: 01.08.2008 ES 200802306
(71) Applicant: Berbegal Pastor, Vicente, 03420 Castalla (Alicante) (ES)
(72) Inventor: Berbegal Pastor, Vicente, 03420 Castalla (Alicante) (ES)
(74) Representative: Del Valle Valiente, Sonia
(86) International application number: PCT/ES2009/000411
(87) International publication number: WO 2010/018265

(57) **Abstract**

The invention relates to a solar tracker including a structure formed by means of a plurality of rigid frames formed by pairs of pillars (1 and 2) connected with ties (4) and collaterally with ties forming Saint Andrew's crosses (5), such that those rigid frames which are anchored to the ground through struts (3) driven therein form the mounting support for a corresponding solar panel-supporting grate (6), the latter being mounted with the possibility of pivoting towards one side or the other and being oriented according to the direction of the sun's rays. Those rigid frames with the grates form alignments in which groups are established, wherein the panels of each group are connected with a tubular element forming a connecting rod (13) which is driven by a power unit to transmit the movement, either in a linear manner and converted into a pivoting movement to the grates (6), or in a pivoting manner directly to said grates (6), and achieve the suitable orientation thereof. The transmission of movement is based on a triangular support (9) mounted in the grates (6), those frames (9) receiving the linear or oscillating movement of the connecting rod (13).

## Description

### Object of the Invention

The present invention relates to a solar tracker, and more specifically to the structure and to the solar tracking system for achieving the suitable orientation of the solar panels of the tracker according to the orientation of the incidence of the sun's rays.

The object of the invention is to improve, facilitate and speed up the construction of a solar tracker or photovoltaic installation, enabling the mounting thereof, preferably in solar fields, adapting perfectly to the relief thereof.

### Background of the Invention

The solar trackers which are mounted in fields can have different types of structures which can be adapted according to the features of each installation.

In this sense, the applicant has patented and markets fixed structures by means of which a high level of safety is achieved for the panels thereof with various secure points such as tamper-proof nuts, covers on the sides which hinder the extraction of the panels, etc., such that structures of this type can furthermore be complemented with a system of clamps for fastening the panels.

He is also the proprietor of a mono-post type fixed structure which achieves implementing the photovoltaic installations on irregular terrains, adapting to the terrain and overcoming much greater slopes than with the conventional structure.

The first approach which is performed in relation to solar trackers consists of the seasonal mobile structure, a better use of the hours of solar radiation in the four seasons of the year being achieved, which is achieved by means of a multipoint system which allows automatically orienting the solar installation in four different positions.

This system allows improving the production compared to conventional structures, as well as achieving a considerable reduction of the installation times with respect to conventional solar tracking systems.

In addition, in the types of fixed installations with a mono-post structure, there are no means which allow varying the orientation in the azimuthal axis, i.e., which have an east-west movement.

### Description of the Invention

The proposed solar tracker, which is based on the fixed support and mono-post structure, has a series of particularities which will be set forth throughout the present description and from which considerable and important advantages which will also be mentioned are derived.

More specifically, the solar tracker of the invention comprises a fixed structure anchored to the ground and a solar tracking system, such that the fixed structure is based on a series of rigid frames in each of which there is arranged a grate in charge of supporting, in each case, a plurality of solar modules, which grate, in addition to being arranged with a determined inclination with respect to the ground for the purpose of achieving a perpendicular incidence of the sun's rays during the twelve hours of the solar day, is connected with means by which an azimuthal tracking movement of such grates and therefore of the panels between -45° and 45°, totally covering an angle of 90°, is established.

More specifically, the structure of the solar tracker is formed by means of a plurality of rigid frames, each of which is formed by two pillars, one referred to as "north pillar" and another one referred to as "south pillar", formed by preferably U-shaped sections of cold-formed sheet metal, and wherein the pillars are braced on one hand by means of north-south ties and on the other hand, collaterally braced with one another by means of ties forming Saint Andrew's crosses, such that on each rigid frame there is mounted a grate formed by a sort of rectangular framing with bracing crosspieces, such that the removable attachment between the grate and the rigid frame is performed by means of respective U-shaped parts with the interposition of polymeric bearings manufactured in a very high-strength self-lubricating technical plastic, minimizing the friction occurring during the rotational movement between both surfaces, i.e., that of the U-shaped part and that of the grate, during the solar tracking movement.

The assembly formed by each rigid frame with its corresponding grate forms what has been called "machine", such that the actual installation or solar tracker includes a plurality of rows of machines in the east-west direction, always facing south, the rows being divided into a determined number of machines which will all be moved by a single power unit, to thus achieve the simultaneous solar tracking of all the machines of each group. Evidently, the number of machines moving together varies according to factors such as geographical location, geometry of the terrain, shape and features of the modules, etc.

The solar tracking system is mounted on this base structure, which system is driven by a geared motor and which is essentially formed from a tubular element with a circular cross-section which is mounted in a common manner to all the machines of each group, that tubular element, hereinafter referred to as "connecting rod", being connected with an oscillating frame attached to the respective grate and specifically to the crosspiece for attaching such grate to the south pillar, that frame having a triangular configuration, with the vertex oriented downwards and with an intermediate crosspiece in the triangle, such that between that crosspiece and the vertex of the triangle there is mounted a guide on which a runner which is linked to the connecting rod itself runs, all this so that in the oscillating movement of the frame the runner absorbs the upward/downward shifts of the connecting rod, the latter always being maintained at the same height.

Furthermore, this connecting rod is supported, in correspondence with each grate, in a support fixed to the south pillar and provided with a pair of nylon pulleys between which the connecting rod is precisely located, a support and securing for the latter preventing possible derailings thereof being determined. Those connecting rods are jammed by polymeric bearings made of the same material as those provided in the attachment between the pillars and the crosspieces of the grates, for the purpose of preventing friction and extending the duration of the components.

The actuator for carrying out the movements is formed from a geared motor with an output pinion meshing with a rack located longitudinally on the connecting rod and fixed thereto, such that the drive of the geared motor and corresponding meshing of the motor with the rack cause the shift in one direction or the other of that connecting rod, the vertical shift of which is absorbed, as has been stated, by the runner mounted on the guide of the oscillating frame, which will logically cause the oscillating movement, i.e., the movement to one side and the other, of the frame and with it of the solar panel-supporting grate. In the platform in which the geared motor is mounted there have been provided two nylon pulleys on which the connecting rod is supported so that the latter is perfectly guided in the meshing area.

This solar tracking system has an embodiment variant in which the connecting rod is oscillating, for which it has been provided that the triangular frame in correspondence with the vertex has two plates with a separation, between which the connecting rod will be removably mounted through a pin transverse to the mentioned lower plates of the triangular frame.

The actuator as a power unit for making the grates rotate is in this case a linear actuator the piston of which is powered by means of an electric motor, such that the assembly is located on a pivoting base which allows tracking the movement of the connecting rod which, in this case and as has been previously stated, performs an oscillating movement when it is driven by the linear actuator itself.

In this case, said connecting rod does not have additional supports as in the previous option and must only be supported by the triangular frame and the corresponding attachment elements.

In another embodiment variant, on the connecting rod there is arranged a geared rack which is driven by a pinion, which is in turn moved by the corresponding geared motor, such that in order for the grates of the tracker to perform the movement which will allow it to track the solar position, the connecting rod must perform an oscillating movement, as in the previous case, and therefore the assembly of the geared motor with its pinion must perform a vertical movement to accompany the connecting rod and achieve transmitting the power.

To achieve those movements, the geared motor is mounted on a support with two shoes manufactured in nylon and which slide on respective rails belonging to the support itself, such that this geared motor shifts over the mentioned rails, the connecting rod being supported at the lower part by means of a pair of lower pulleys, assuring the position of the geared motor with respect to such connecting rod, limiting the unmeshing of the rack and therefore the loss of traction of the assembly.

In this embodiment variant, the system is mounted on adjustable anchor plates with a centered disc which are capable of absorbing small deviations when fixing the assembly of the tracker to the terrain, bearing in mind that both in this case and in all the previous cases, the structure of the tracker is fixed to the ground by means of struts formed by cylindrical elements with a helical thread and with plates, in this case for the attachment to the support of the mentioned geared motor, and in the rest of the cases for the attachment of said struts to the lower end of the pillars corresponding to the rigid frames.

Finally, an alternative to the tracking system has been provided, based on a rocker which on one hand is articulated to the south pillar and on the other hand is connected to the corresponding crosspiece of the grate by means of a pair of ties, transmitting the rotation of the rocker to the grate.

The attachment between the ties to the rocker and the ties to the crosspiece is performed by means of ball joints for assuring that the rotations are performed without stress.

The corresponding connecting rod which will ultimately carry out the oscillating movement of the grate is connected with the lower part of the rocker, so that when it is pushed by the corresponding power unit, it transmits the movement to the rocker and from the latter to the grate, such that in this case the power unit will be a linear actuator identical to the one provided and mentioned in the second embodiment variant of the tracking system.

Based on the aforementioned features, in addition to the advantages obtained as a consequence of the fixed installation design of the tracker, the terrain surface necessary for mounting the installation is reduced with respect to the conventional ones, it being possible to consider that this terrain reduction is estimated at 74% for an installation having the same number of modules, the number of trenches necessary for electrical channels therefore being reduced as well, where in this case the reduction can be estimated at 80%.

Furthermore, with the use of cylindrical struts with the helical thread segment as means for fixing on the terrain, the mounting times are reduced by up to 75% with respect to the traditional concreting, it not being necessary to perform earthwork, and civil foundation work also being prevented, so the environmental impact decreases.

It is also advantageous for the dismantling of removal of the installation at the end of its service life to be completely reversible and at a virtually nil cost.

Another advantage is that all the mobile parts are mounted on a self-lubricating polymer with a long duration, the lubrication points being eliminated and the maintenance costs being reduced.

### Description of the Drawings

To complement the description which will be made below and for the purpose of aiding to better understand the features of the invention according to a preferred practical embodiment thereof, a set of drawings is attached as an integral part of said description, in which the following has been depicted with an illustrative and non-limiting character:
Figure 1 shows a schematic depiction of several rigid frames braced with one another and which form part of the structure of the solar tracker of the invention.
Figure 2 shows an also perspective view of the complete structure with the grates supported therein and the tubular element acting as a connecting rod common to all the machines formed by the rigid frames with the grates.
Figure 3 shows a depiction according to a detailed perspective view of the way of fixing the grate to the pillars of the rigid frame, in this case to the south pillar, as well as the linking of the oscillating frame mounted on the grate with the connecting rod.
Figure 4 shows a detail in perspective view of the oscillating frame with the guide and runner for establishing the solar tracking of the grate.

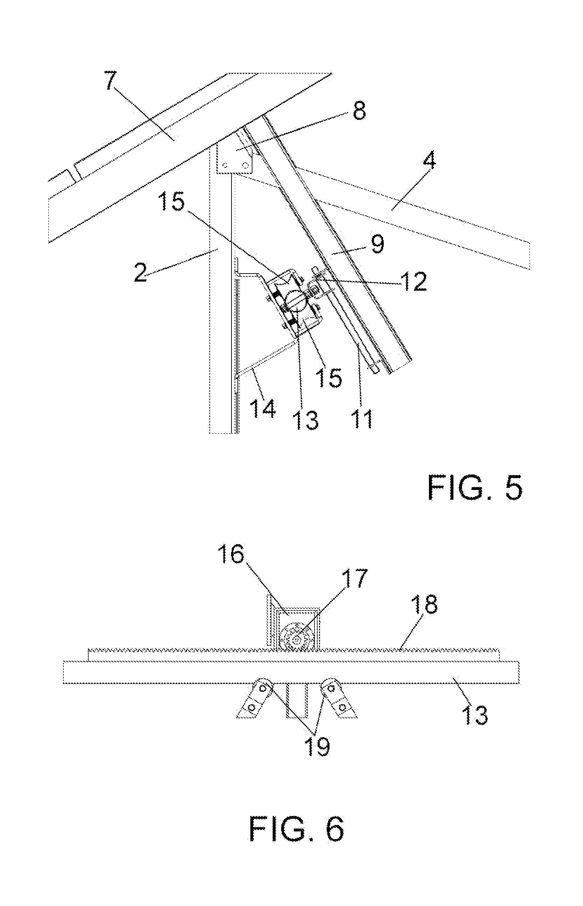

Figure 5 shows a side view of the detail corresponding to the linking of the connecting rod to the runner mounted on the guide of the oscillating frame, and the support bearing the support pulleys of the connecting rod mounted on the south pillar of the rigid frame.
Figure 6 shows a detail of the actuator for causing the solar tracking movement.
Figure 7 shows a view corresponding to a detail in perspective view of an embodiment variant of the triangular oscillating frame through which the oscillating movement is transmitted to the solar panel-supporting grate.
Figure 8 shows a movement transmission system, in this case from a linear actuator, corresponding to the version of the triangular oscillating frame of the previous figure.
Figure 9 shows another perspective and detailed view corresponding to the actuator in which the latter is shiftable, and the connecting rod provided with oscillating movement.
Figure 10 finally shows a perspective of an alternative embodiment in which the movement to the solar panel-supporting grate is performed by means of a rocker directly connected with the corresponding connecting rod.

### Preferred Embodiment of the Invention

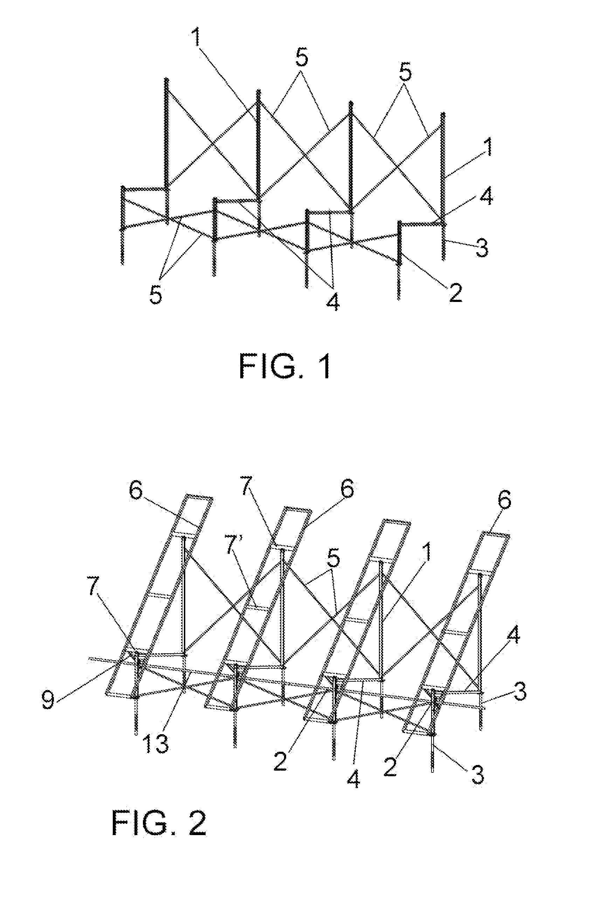

As can be seen in the previous figures, and specifically in relation to Figures 1 and 2, it can be observed how the structure of the solar tracker of the invention is formed by means of a plurality of rigid frames and as many other grates, which rigid frames in each case are formed by a north pillar (1) and a south pillar (2), attached at their lower end to corresponding struts (3) driven into the terrain, which are special struts and are formed by cylindrical elements with a helical thread segment for their driving into the terrain. The pillars (1 and 2) are braced by means of ties (4), whereas the pillars of contiguous rigid frames are braced by means of ties (5) forming Saint Andrew's crosses. The pillars (1 and 2) preferably have a U-shaped configuration and are manufactured in cold-formed sheet metal, whereas the bracing ties (4) are formed by sections with a quadrangular cross-section, and the ties forming Saint Andrew's crosses (5) are formed by flat bars, although logically both the pillars and the ties can be formed with other configurations.

The attachment between pillars (1 and 2) to the driven struts (3) is performed by means of anchor plates attached to the pillars by means of welding and attached to the struts (3) by means of a metric screw, which anchor plates have machined therein mounting holes which allow adjusting the position of the metric screw.

A grate (6) is mounted on each of the rigid frames formed in the described manner as a support for several solar panel modules, which grate (6) forms a sort of rectangular framing with an intermediate crosspiece (7') and two crosspieces (7) equidistant from that intermediate crosspiece (7') and from the crosspieces which form the ends. The longitudinal elements of the grates (6) are preferably formed in the form of a tube and the attachment of the crosspieces (7 and 7') to those stringers or longitudinal elements is performed by means of welding.

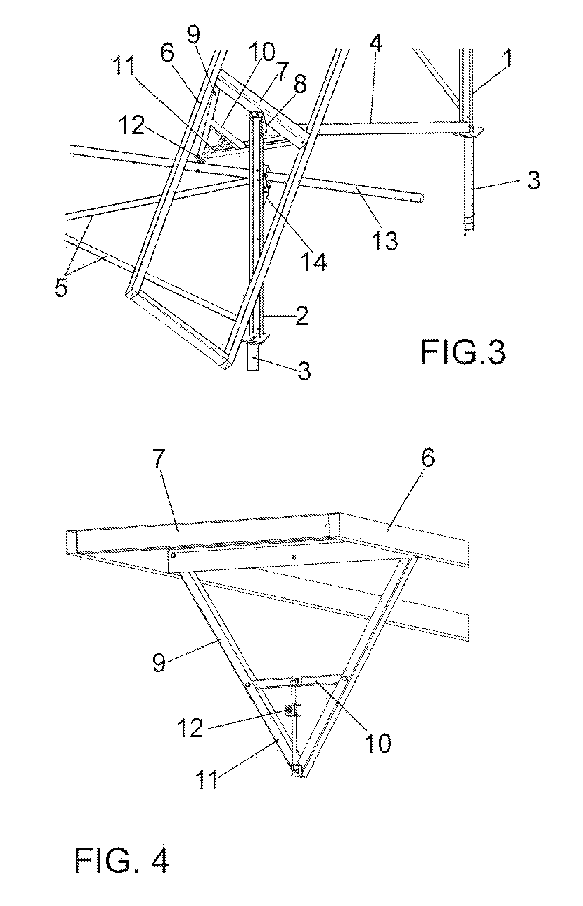

The attachment of the grates (6) to the rigid frames is specifically performed on the upper ends of the pillars (1 and 2), with the interposition of U-shaped parts (8) fixed in turn in an articulated manner to the corresponding crosspiece (7), since, in addition, those U-shaped parts (8) are rigidly attached by means of screws to the sections forming the pillars (1 and 2), as can be seen in the detail of Figure 3.

The structure thus formed, i.e., by means of the rigid frames and the grates, is made of hot-galvanized steel or aluminium, and the design thereof is performed on the type of panel that must be housed, whether it is a photovoltaic panel, thermal panel or panel with concentration cells, the structure being designed so that the grate or grates (6) have the inclination demanded by the latitude at which it is to be installed and/or the needs of the solar plant. Those grates (6) will preferably be inclined forming an angle of approximately 20° with respect to the ground and always facing south.

An important feature to be taken into account is that the attachment of the parts (8) to the crosspieces (7) is performed by means of the interposition of polymeric bearings for preventing the friction which would occur due to the relative movement of the two surfaces during the solar tracking movement, those polymeric bearings being manufactured in a very high-strength and lubricated technical plastic.

Each rigid frame with its grate and other elements associated therewith has been called "machine", such that the solar installation will include a series of rows of machines in the east-west direction, always facing south and the rows being divided into a determined number of machines, all those of each group being moved by a single power unit, such that the number of machines which can be simultaneously moved varies according to the geographical location, the geometry of the ground, and other characteristics.

In addition to the inclination with which the grates (6) are mounted, such grates are furthermore provided with an azimuthal movement to orient them and, with them, the solar panels that they support in an optimal manner, i.e., with the plane of the surface of the solar panels perpendicularly to the incidence of the sun's rays, therefore those grates (6) may pivot towards one side and towards the other 45°, with a total angle of 90°.

The movement system for achieving that pivoting of the grates (6) is based on the oscillation of a triangular frame (9), determined by two side branches at an angle which at their end are attached to the crosspiece (7) forming the triangle, this frame being provided with an intermediate crosspiece (10) between which and the corresponding vertex there is mounted a guide (11) on which a runner (12) can slide, to which runner a cylindrical element (13) hereinafter referred to as "connecting rod" will be fixed. As has already been mentioned above in the attachment between pillars and grates, polymeric bearings intervene in the sliding of the runner (12) on the guide (11) in order to logically prevent the friction between the two parts, i.e., between the guide and the runner itself.

When performing the solar tracking, the triangular frame (9) will tend to describe an oscillating movement, such that the runner (12) mounted on the guide (11) has been arranged in order to prevent this, since that runner will absorb the vertical movement which the connecting rod (13) should perform, allowing the latter to be able to be fixed in height. The attachment of the connecting rod (13), formed by a tubular element with a circular cross-section, and the runner (12) is shown in detail in Figure 3.

In addition to this attachment of the connecting rod to the runner, it is supported in a support (14) fixed to the south pillar (2), and in which support there are mounted two pulleys (15) close to and separated from one another, between which the mentioned connecting rod (13) is precisely located, which pulleys (15) are made of nylon and prevent the possible derailing of such connecting rod (13).

Likewise, those pulleys (15) are jammed by polymeric bearings made of the same material as those already mentioned to prevent friction and extend the duration of the components.

The power unit which will provide the grates (6) with movement as a consequence of the fact that the grates of each "machine" are connected with one another through the connecting rod (13) is based on a driving geared motor (16) at the output of which there has been provided a pinion (17) meshing with a rack (18) laterally fixed to the connecting rod (13) itself, such that in correspondence with each power unit there have provided two pulleys (19) mounted on a support, which in turn form a support for the connecting rod (13), the latter this being perfectly guided in the meshing area.

The rotation of the pinion in one direction or the other thus entails the shift in one direction or the other of the connecting rod (13) and, consequently, due to its linking to the frame (9), the pivoting of the latter and, with it, of the grate (6) will thus occur, the simultaneous movement extending to all the grates forming each "machine" in the assembly of the installation.

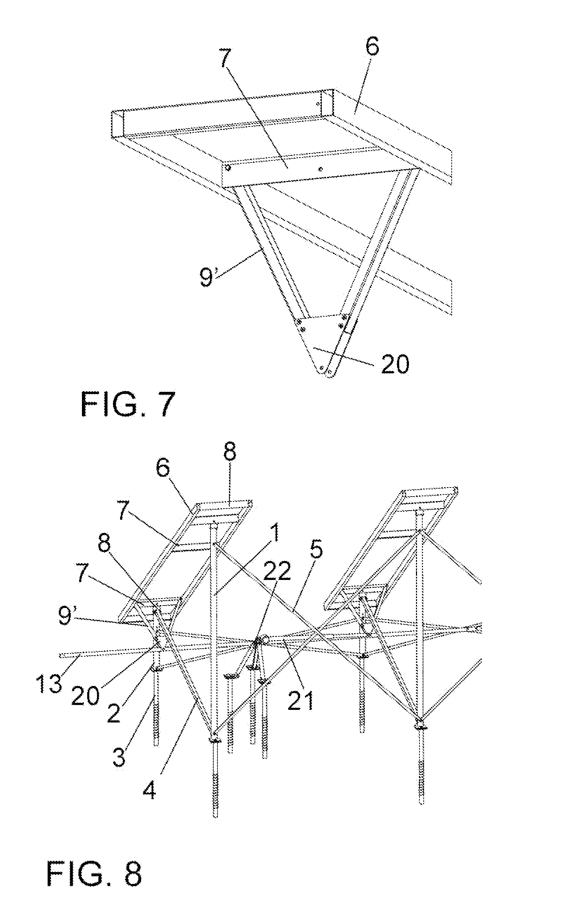

In an embodiment variant, the movement system is provided so that the connecting rod (13) itself can oscillate instead of being maintained at the same height as in the previous case, and the oscillation of which is due to the fact that the corresponding triangular frame (9'), instead of including its linking to the runner, is linked between a pair of tabs (20) fixed to the vertex of said triangular frame (9'), between which tabs (20) the connecting rod (13) is mounted through a pin, as depicted in Figure 8.

In this case, the power unit which will make the grate (6) pivot consists of a linear actuator formed by means of a piston (21) powered by means of a geared motor, and which actuator or piston (21) is mounted on a pivoting base (22) allowing it to track the movement of the connecting rod (13), which will perform an oscillating movement when it is driven by the linear actuator (21). In this case, the connecting rod (13) does not have any type of additional support as occurred in the previous case, being supported only by the triangular frames (9') and the corresponding attachment elements.

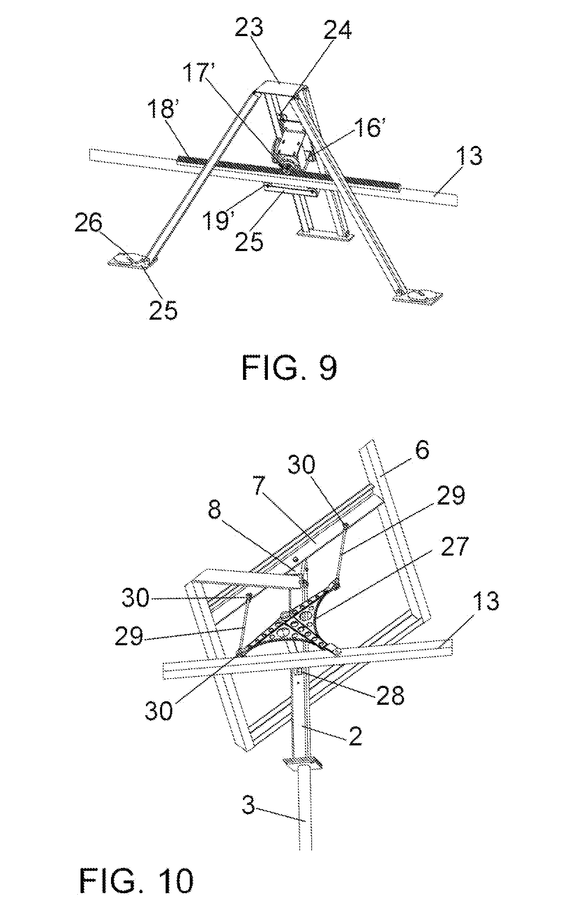

In another embodiment variant, it has been provided that the drive is performed by means of a geared motor (16') slidingly mounted between a pair of guides (23) on which respective shoes (24) slide, which shows form part of the geared motor (16') itself, such that at the output thereof, the corresponding pinion (17') meshes with a rack (18') provided on the guide (13), as depicted in Figure 9, which connecting rod (13) is supported in a pair of nylon pulleys (19') arranged on a suitable support (25).

In this case, in order for the grates (6) of the tracker to perform the movement allowing them to track the solar position, the connecting rod (13) must perform an oscillating movement and, with it, the entire assembly of the geared motor (16') with its pinion (17') must likewise perform a vertical movement to accompany the connecting rod (13) and achieve transmitting the power. Said movement is achieved as a result of the mounting sliding in an upward and downward direction of the geared motor (16'), as has been stated above, with the particularity that the pulleys (19') provided on the support (25) for supporting the connecting rod (13) make the latter be maintained in the correct position with respect to the geared motor (16'), preventing the unmeshing with respect to the rack (18') and therefore the loss of traction of the assembly.

In this case, the frame for supporting the assembly is mounted on anchor plates (26') which, as a result of an off-center disc (26), allow absorbing small modifications when driving the corresponding struts (3), such that, as is logical, those plates (26') attach the struts (3), not depicted in Figure 9, to the corresponding pillars (2).

Finally, in an embodiment variant, the oscillating movement to the grates (6) is performed by means of a rocker (27), as depicted in Figure 10, wherein said rocker is mounted on the south pillar (2) through a support (28), all this such that this rocker (27) in its mounting may rotate towards one side and the other to transmit its oscillating movements to the grate (6) itself as a consequence of the fact that the ends of such rocker (27) are connected, by means of ties (29), with the crosspiece (7) of the grate (6), whereas the other end of such rocker (27) is directly connected with the connecting rod (13). The attachment of the ties (29) to the crosspiece (7) and to the rocker (27) itself is formed in each case by means of a ball joint (30) which assures a rotation without stresses, all this such that when the connecting rod (13) is driven through the corresponding power unit, the shift in one direction or the other of such connecting rod (13) entails the pivoting towards one side or the other of the rocker (27) and therefore the transmission of the forward movement to the grate (6), so that the latter acquires a pivoting towards one side or the other and to thus achieve the desired orientation. In this case, the drive of the connecting rod (13) will be performed by means of a power unit forming a linear actuator, such as that provided in the embodiment shown in Figure 8.

## Claims

1. A solar tracker, which, being formed from a structure provided with means enabling the orientation with respect to the azimuthal axis of the different solar panel-supporting grates, is **characterized in that** the structure is formed by means of a plurality of rigid frames in each of which there is mounted a grate (6), forming alignments in the east-west direction, and in each alignment group of rigid frames and grates (6) which are simultaneously driven in movement to achieve the orientation of the different grates and therefore of the solar panels, according to the incidence of the sun's rays; it having been provided that each rigid frame is formed by a north pillar (1) and a south pillar (2) with a bracing of ties (4) between them, and a bracing based on ties (5) in the form of Saint Andrew's crosses, with the contiguous ones, said pillars (1 and 2) being mounted on corresponding struts (3) driven into the ground; with the particularity that the grates (6) are mounted between the pillars (1 and 2) of each rigid frame by means of the interposition of U-shaped parts (8) which are rotatably fixed on respective crosspieces (7) of the grates (6); it having been provided that the oscillation movement towards one side and the other of said grates (6) and therefore the orientation movement thereof towards the suitable incidence of the sun's rays, is performed by means of a power unit based on a geared motor (16 - 16') at the output of which there has been provided a pinion (17 - 17') meshing with a rack (18 - 18') laterally arranged on a tubular element with a circular cross-section acting as a connecting rod (13), common to the different rigid frames and grates (6) of each group, such that the movement generated by the power unit on the connecting rod (13) is transmitted to the grates (6), causing an oscillating movement towards one side or the other thereof.

2. The solar tracker according to claim 1, **characterized in that** the connecting rod (13) through which the oscillating movement is transmitted to the grates (6) remains fixed in height and is connected with an oscillating support (9) fixed to the corresponding crosspiece (7) of the grate (6), in which pivoting frame (9) there is mounted a guide (11) with a runner (12) to which the connecting rod (13) itself is linked, so that in the shift thereof due to the drive of the power unit that linear movement is transmitted and is converted into an oscillating movement on the frame (9) and therefore on the grate (6), causing the pivoting towards one side and the other thereof.

3. The solar tracker according to claim 2, **characterized in that** the connecting rod (13), in addition to its linking to the runner (12) mounted in the guide (11) of the triangular and pivoting frame (9), is supported on a support (14) fixed to the south pillar (2), being guided between a pair of pulleys (15) mounted on the support (14).

4. The solar tracker according to claims 2 and 3, **characterized in that** on the connecting rod (13) there is mounted a rack (18) on which a pinion (17) corresponding to the driving geared motor (16) meshes, such that the rotation in one direction or the other of the pinion (17) entails the shift towards one side or the other of the connecting rod (13) and the consequent oscillating movement of the triangular frame (9) to transmit the movement towards one side and the other of the grate (6) itself, the connecting rod (13) being supported **in that** meshing area on a pair of pulleys (19) which keep it in the position of meshing its rack (18) with the pinion (17) of the geared motor (16).

5. The solar tracker according to claim 1, **characterized in that** the connecting rod (13) is mounted between a pair of tabs (20) provided in the vertex of a triangular frame (9') fixed to the crosspiece (7) of the south pillar, said connecting rod (13) being connected with a linear actuator (21) formed by a piston driven by a motor mounted on a support (22), establishing an oscillating movement on said connecting rod (13) and the consequent movement on the triangular frame (9') and with it of the grate (6).

6. The solar tracker according to claim 1, **characterized in that** on the connecting rod (13) there is fixed a rack (18') supported on two pulleys (19') arranged on a lower support (25), and the rack (18') of which meshes with a pinion (17') provided at the output of the geared motor (16'), the latter being mounted such that it can shift in an upward and downward direction on respective guides (23) in which corresponding shoes (24) slide, which shoes form part of the geared motor (16') itself, such that the oscillating movement performed by the connecting rod (13) is accompanied in the vertical movement by the geared motor (16') to achieve transmitting the power to the grate (6), it having been provided that the assembly is mounted on anchor plates (26') with which centering discs (26) collaborate to absorb small deviations in the mounting thereof on the corresponding struts driven into the ground.

7. The solar tracker according to claim 1, **characterized in that** the connecting rod (13) is connected in an articulated manner with a shoe (27) which is mounted on a support (28) of the south pillar (2) and which shoe (27) includes two ends opposite that for the mounting thereof on the connecting rod (13) which are articulated, through ties (29), to the corresponding crosspiece (7) of the grate (6), such that the shift towards one side and the other of the connecting rod (13) by the drive of the corresponding power unit entails the oscillation in one direction or the other of the rocker (27) and with it the pivoting towards one side or the other of the grate (6) itself.
